# EUROPEAN PATENT APPLICATION

(11) **EP 3 117 883 A1**
(43) Date of publication of application: **18.01.2017**
(21) Application number: 16179484.7
(22) Date of filing: 14.07.2016
(51) Int. Cl.: A63F 13/61, A63F 13/35, A63F 13/533, A63F 13/69, A63F 13/79

(54) **SERVER DAEMON BASED GAMEPLAY MANAGEMENT**

(30) Priority: 14.07.2015 US 201562192498 P; 11.07.2016 US 201615207246
(71) Applicant: Hothead Games, Inc., Vancouver, British Columbia V6G 2T1 (CA)
(72) Inventor: Ceraldi, James Paul, Vancouver, British Columbia V6G 2T1 (CA); Brandt, Bryan, Vancouver, British Columbia V6G 2T1 (CA)
(74) Representative: Käck, Stefan

(57) **Abstract**

Server daemon based gameplay management systems and methods are provided herein. An example system includes a daemon that is configured to establish (204) one or more triggers that define when an offer is active within the virtual gaming environment. The triggers are associated with game related events, one or more conditions under which the offer is triggered, and items that are provided in the offer. The system monitors (206) gameplay within the gaming environment, determines (208) at least one of the one or more triggers which are fulfilled during gameplay within the virtual gaming environment, and provides (210) an item for use within the gameplay.

## Description

### FIELD OF THE PRESENT TECHNOLOGY

The present technology relates generally to virtual gaming, and more specifically, but not by limitation, to server-based daemon control and management of experiences during virtual gameplay based on triggers and conditions which are monitored during gameplay.

### SUMMARY

The invention is defined in claims 1 and 2, respectively. Particular embodiments are set out in the dependent claims.

In particular, the present disclosure is directed to a system comprising: (a) a server that provides a virtual gaming environment; and (b) a daemon that: (i) establishes one or more triggers that define when an offer is active within the virtual gaming environment, wherein the triggers are associated with game related events, one or more conditions under which the offer is triggered, and items that are provided in the offer; (ii) monitors gameplay within the gaming environment; (iii) determines at least one of the one or more triggers which are fulfilled during gameplay within the virtual gaming environment; and (iv) provides an item for use within the gameplay.

The present disclosure is also directed to a system comprising: (a) a server that provides a virtual gaming environment; and (b) a client coupled with the server, wherein gameplay occurs on the client and the client comprises a daemon that: (i) establishes one or more triggers that define when an offer is active within the virtual gaming environment, wherein the triggers are associated with game related events, one or more conditions under which the offer is triggered, and items that are provided in the offer; (ii) monitors gameplay within the gaming environment; (iii) determines at least one of the one or more triggers which are fulfilled during gameplay within the virtual gaming environment; and (iv) provides an item for use within the gameplay.

### BRIEF DESCRIPTION OF THE DRAWINGS

Certain embodiments of the present technology are illustrated by the accompanying figures. It will be understood that the figures are not necessarily to scale and that details not necessary for an understanding of the technology or that render other details difficult to perceive may be omitted. It will be understood that the technology is not necessarily limited to the particular embodiments illustrated herein.
FIG. 1A is a schematic diagram of an exemplary computing architecture that can be used to practice aspects of the present technology.
FIG. 1B is a schematic diagram of an exemplary computing architecture that can be used to practice aspects of the present technology.
FIG. 2 is a flowchart of an example method that is executed by a system of the present disclosure.
FIG. 3 is a flowchart of an example method for establishing and using timing parameters.
FIG. 4 is a flowchart of an example method for segmenting and targeting players alone or in groups (cohorts).
FIG. 5 illustrates an example GUI of an offer pop-up screen.
FIG. 6 illustrates an exemplary computing system that may be used to implement embodiments according to the present technology.

### DESCRIPTION OF EXEMPLARY EMBODIMENTS

While this technology is susceptible of embodiment in many different forms, there is shown in the drawings and will herein be described in detail several specific embodiments with the understanding that the present disclosure is to be considered as an exemplification of the principles of the technology and is not intended to limit the technology to the embodiments illustrated.

The terminology used herein is for the purpose of describing particular embodiments only and is not intended to be limiting of the technology. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

It will be understood that like or analogous elements and/or components, referred to herein, may be identified throughout the drawings with like reference characters. It will be further understood that several of the figures are merely schematic representations of the present technology. As such, some of the components may have been distorted from their actual scale for pictorial clarity.

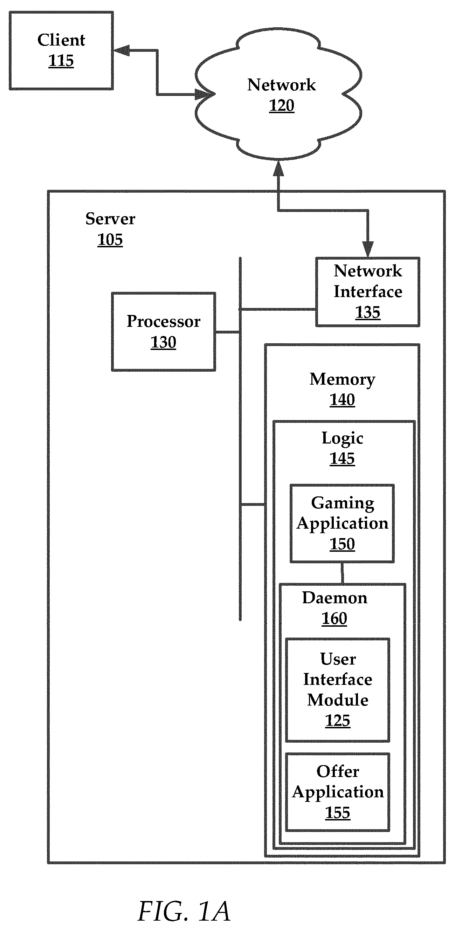

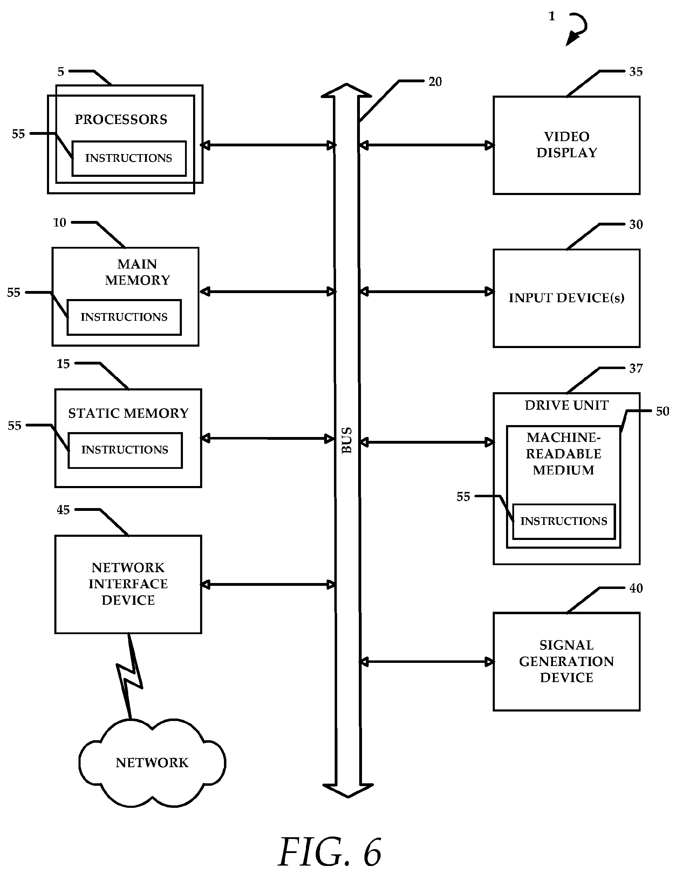

FIG. 1A illustrates an exemplary architecture for practicing aspects of the present technology. The architecture comprises a server system, hereinafter "system 105" that is configured to provide various functionalities, which are described in greater detail throughout this document. Generally the system 105 is configured to communicate with client devices, such as client 115. The client 115 may include, for example, a Smartphone, a laptop, a computer, or other similar computing device. An example of a computing device that can be utilized in accordance with the present technology is described in greater detail with respect to FIG. 6.

The system 105 may communicatively couple with the client 115 via a public or private network, such as network 120. Suitable networks may include or interface with any one or more of, for instance, a local intranet, a PAN (Personal Area Network), a LAN (Local Area Network), a WAN (Wide Area Network), a MAN (Metropolitan Area Network), a virtual private network (VPN), a storage area network (SAN), a frame relay connection, an Advanced Intelligent Network (AIN) connection, a synchronous optical network (SONET) connection, a digital T1, T3, E1 or E3 line, Digital Data Service (DDS) connection, DSL (Digital Subscriber Line) connection, an Ethernet connection, an ISDN (Integrated Services Digital Network) line, a dial-up port such as a V.90, V.34 or V.34bis analog modem connection, a cable modem, an ATM (Asynchronous Transfer Mode) connection, or an FDDI (Fiber Distributed Data Interface) or CDDI (Copper Distributed Data Interface) connection. Furthermore, communications may also include links to any of a variety of wireless networks, including WAP (Wireless Application Protocol), GPRS (General Packet Radio Service), GSM (Global System for Mobile Communication), CDMA (Code Division Multiple Access) or TDMA (Time Division Multiple Access), cellular phone networks, GPS (Global Positioning System), CDPD (cellular digital packet data), RIM (Research in Motion, Limited) duplex paging network, Bluetooth radio, or an IEEE 802.11-based radio frequency network. The network 120 can further include or interface with any one or more of an RS-232 serial connection, an IEEE-1394 (Firewire) connection, a Fiber Channel connection, an IrDA (infrared) port, a SCSI (Small Computer Systems Interface) connection, a USB (Universal Serial Bus) connection or other wired or wireless, digital or analog interface or connection, mesh or Digi® networking.

The system 105 generally comprises a processor, 130, a network interface 135, and a memory 140. According to some embodiments, the memory 140 comprises logic (e.g., instructions) 145 that can be executed by the processor 130 to perform various methods. For example, the logic may include a user interface module 125 as well as a video game client application (hereinafter "gaming application 150") and game offer application ("offer application 155"), which are configured to provide the functionalities described in greater detail herein. The offer application 155 may also be embodied as a server daemon that executes on the system 105.

It will be understood that the functionalities described herein, which are attributed to the system 105 and applications 150/155 may also be executed within the client 115. That is, the client 115 may be programmed to execute the functionalities described herein. In other instances, the system 105 and client 115 may cooperate to provide the functionalities described herein, such that the client 115 is provided with a client-side application that interacts with the system 105 such that the system 105 and client 115 operate in a client/server relationship. Complex computational features may be executed by the server 105, while simple operations that require fewer computational resources may be executed by the client 115, such as data gathering and data display.

In general, the user interface module 125 may be executed by the system 105 to provide various graphical user interfaces (GUIs) that allow users to interact with the system 105. In some instances, GUIs are generated by execution of the applications 150/155. Users may interact with the system 105 using, for example, a client 115. The system 105 may generate web-based interfaces for the client.

The applications 150/155 can be executed locally on a user device (e.g., client 115), such as a Smartphone or tablet device. Alternatively, the application can be accessed by a user device over a network. Thus, the applications 150/155 can be executed on a server and accessed by the user device using a browser application. The server will serve GUIs of the applications 150/155 as web pages of a standard or mobile website.

In some embodiments, the gaming application 150 is configured to provide the user with a gaming experience, such as a virtual gaming environment where the user participates in gameplay. Examples of virtual gaming environments include, but are not limited to role playing games, first person shooter games, multiplayer games, sporting games, and so forth.

Some gaming environments include various screens, locations, venues, missions, or other aspects that are part of the gameplay. The present technology allows for the creation of offers by the offer application 155 that are based on gameplay or other activities within the virtual game environment. The created offers can be inserted into gameplay based on various aspects of gameplay, as described below.

In some embodiments, the offer application 155 can comprise a configuration (JSON) file that contains a list of "offers" that can potentially be presented to a player.

In some embodiments, an offer can comprise one or more of the following features. One feature includes a trigger, which specifies where in the game environment an offer could become active. For example, a trigger can include the player accessing certain screens, starts or completing a mission. That is, each of the one or more triggers specifies a location, event, or accomplishment within the gameplay that activates an offer for the item.

By way of definition, as used herein a "mission" will be defined broadly as a unit of activity performed or executed within the virtual gaming environment. Examples of missions include, but are not limited to levels, quests, achievements, feats, and so forth.

Another feature includes a condition that controls whether an offer can be triggered. For example, a condition can comprise an amount of currency a player has, whether the player succeeded at a mission, or whether they've converted on other offers. Other examples include incentivizing player purchases through failure or expected failure during gameplay. For example, the offer application 155 can determine that the player is underequipped for a mission or an activity. In another example, a player underperforms at a mission resulting in failure to complete the mission. The offer application 155 can determine one or more appropriate offers to provide the player based on their failures or weaknesses, also referred to as a player deficit.

In some embodiments, the trigger(s) and condition(s) associated with gameplay can control the selection of an item for the offer that is presented to the player. Thus, the item describes at least a portion of the contents of the offer. For example, the offer could include discounts on specific weapons, power-up bundles, discounts on in-app-purchases, or even hints to the user for use within the gameplay. In one embodiment, if the system 105 determines that the player has consistently failed to accomplish a particular task within the gameplay, the offer application 155 can provide the player with a purchasable hint that will instruct the player in a way that allows them to complete the task.

In some embodiments, the offer application 155 can implement timing parameters, which control whether the offer is a "hard sell" (immediate), timed offer, or repeating offer. The offer application 155 can selectively change these timing parameters using player behavioral data if the current timing parameters are not driving sales sufficiently. An instance where a player responds to an offer and purchases an item is referred to as a successful offer event. When the player does not respond to an offer by purchasing an item it is referred to as an unsuccessful offer event.

The server can maintain performance thresholds or quotas for sales and offers. When the sales or successful offer events do not meet or exceed expected thresholds, the server can adjust the parameters of offers to increase the successful offer events. For example, the server can adjust a price of an offer or a frequency of the offer to drive interest.

In operation, as the player performs actions in the gaming environment, the game client code (applications 150/155) will check the offer list and associated conditions to determine whether an offer should be activated.

Upon activation, the offer will be displayed to the user in the form of a pop-up (in some embodiments), and will populate various parts of the game UI (such as the Specials screen or the header ad space), based on per-offer configuration parameters such as trigger, conditions, and so forth. By way of definition, a "specials" screen could include, for example, an in-game store screen that includes the content of an offer, as well as any conditions or information associated with the offer.

Depending on the item type, the player can choose to accept the offer (usually by converting on the offered purchase) or decline the offer by dismissing the UI.

In the case of timed offers, the offer will persist and can be re-accessed through UI such as the Specials screen in an in-game store.

The system 105 verifies certain trigger conditions for offers, such as whether it has been activated previously, but otherwise allows the player to be authoritative on its activation.

The system 105 verifies any discounts or modifications applied by offers, in some embodiments.

In additional embodiments, the system 105 can be configured to create triggers that are server-based and driven by gameplay analytics, as well as subtleties of in-game user behavior.

In some embodiments a server daemon will automatically segment players based on predefined spending and playing characteristics, along with conversion rates on offers. A server daemon will flag user segments or cross-segments that are either under- or over-performing based on revenue, retention, or conversion thresholds (relative to successful versus unsuccessful offer events).

According to some embodiments, for under-performing offers, the server daemon can flag these to be re-addressed. For over-performing offers, the server daemon can flag these to be followed up with additional offers to optimize sales opportunities.

In some embodiments, the system 105 is provisioned with additional triggers, conditions and item types, and flexible timing parameters. Additional embodiments include user-friendly UIs that allow simple construction and deployment of offers.

The system 105 can create offers that will allow arbitrary graphics and UI elements to be added, instead of the fixed set of semi-configurable offer items, which are contemplated in some embodiments.

In some embodiments, the system 105 can provide near-live analytics on deployed offers which are displayed in a dashboard view.

In accordance with the present technology, the server daemon can utilize predefined configurations, and in other embodiments, the server daemon can be adapted with artificial intelligence that can adapt and learn what offers and offer combinations and timing are working. The server daemon can selectively adjust these parameters automatically within a given safe range of values to increase commercialization. Exemplary embodiments include configurations comprised of values or ranges of values for things such as, play time, currency balance, real world money spent to date, mission, level, time since last purchase, average or typical real world currency spend in game, etc.

These processes can occur without additional input from a system manager until definitions and offers were edited or added. The system daemon can target both groups (cohorts) and individuals. For example, a group could include players who tend to purchase high dollar items, players who purchase items after failing during gameplay, players who frequently browse virtual shops within the virtual environment, and so forth.

System managers could create new definitions for cohorts and also craft new offers for the system to consider both for cohorts and for individual users. The system daemon would be able to move individuals into and out of a variety of user cohorts automatically based on user behavior and defined cohorts to better enable targeting of groups or 'types of users' and the system can specifically tailor offers for each individual, tracking successful and unsuccessful sales offers and adjusting for each user by itself.

Thus, the server daemon can selectively regroup a player from a first segment of the segments to a second segment of the segments based on at least one change in user behaviors that indicates that the player should be regrouped. For example, if a player is initially categorized as a high value purchaser who always accepts offers and the server daemon determines from data gathered during gameplay that the player is not purchasing items as frequently, the server daemon can regroup the player into another segment. The server daemon could place the player in a segment that is targeted with lower priced items or is targeted less frequently to avoid overexposing the player to offers.

As mentioned above, some embodiments allow for provisioning and execution of the virtual game environment and the commercial offers on a server, which pushes the same to the client. The system 105 can implement changes to either the game environment or the commercial offer algorithms in an expeditious manner without requiring the client to update or install new features as they are created. Some drawbacks of a server only implementation of applications 150/155 can include a slow gaming experience due to network latency. Thus, any latency in the network that couples the system 105 and the client could result in a poor user experience due to slow UI response and slow game play - just as an example.

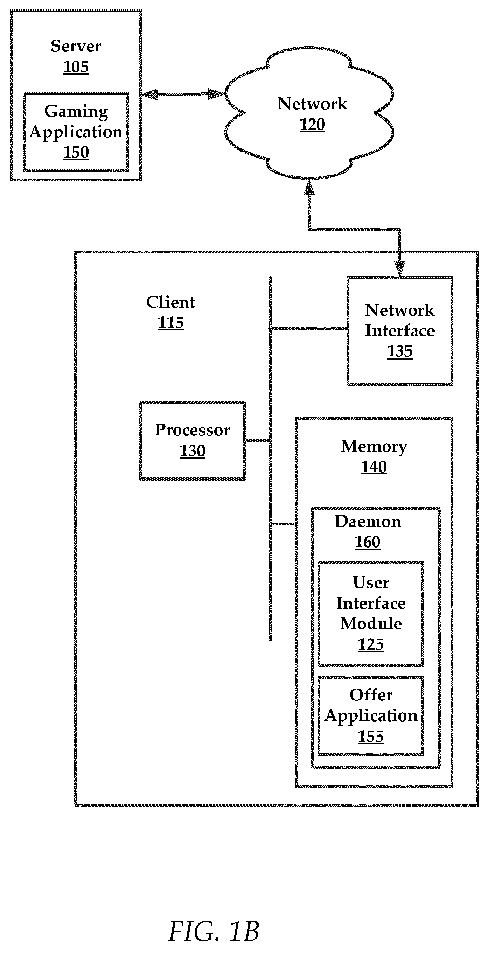

In other embodiments (see FIG. 1B), the UI module 125 and applications 150 and/or 155 can reside and execute on the client 115. These embodiments allow for fast and latency reduced performance of both the UI module 125 and the gaming application 150 due to lack of dependency on the network which delivers content from the system 105 to the client 115. The offer application 155 can reside on the system 105 and prompt interjection of offers into the gameplay provided by the gaming application 150 on an as-needed basis. Additional components of the client 115 are described in greater detail above with reference to FIG. 1A, as part of the system 105. Although not shown, the system 105 would also include any required components for computing, storage, and networking.

In another embodiment, the UI module 125 and both applications 150/155 can reside on the client 115. The offer application 155 can cooperate with the system 105 to complete orders for offers that are accepted by the client 115.

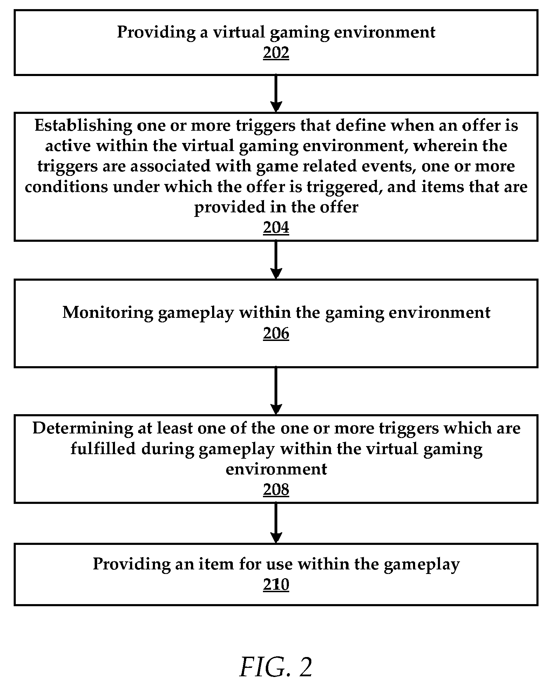

FIG. 2 illustrates a flowchart of an example method that is executed by a system of the present disclosure. The method includes a step 202 of providing a virtual gaming environment. The virtual environment can include any video based or virtual environment such as a video game.

The method includes a step 204 that establishes one or more triggers that define when an offer is active within the virtual gaming environment. For example, the system can establish times or locations within the video game at which an offer is to be provided to a player. The exact details of the offer can depend on various conditions. Thus, the triggers are associated with game related events as well as one or more conditions under which the offer is triggered. In some instances, the items selected for the offer are also selectable by the system. An example condition could be a current amount of inventory or virtual money owned by the player, or a skill level of the player.

The item(s) selected for the offer are based on the various permutations of conditions and triggers.

Next, the method includes a step 206 of monitoring gameplay within the gaming environment. By way of example, monitoring can include tracking data such as gameplay time, a player's habits and behaviors, location within the game environment, and other game related data.

Next, the method includes a step 208 of determining at least one of the one or more triggers which are fulfilled during gameplay within the virtual gaming environment. For example, the system can determine that the player has accessed a certain location within the game or a certain level (a trigger). In order to be successful at that level of game play, the system determines that the player needs to upgrade their equipment. An offer is fashioned based on conditions. For example, the system determines that the player has $1,000 in their virtual account and that they frequently purchase high priced items. Using this knowledge the system can craft an offer that includes an item that is priced according to the player's wealth and proclivity to purchase.

If the item is purchased, the method includes a step 210 of providing an item for use within the gameplay.

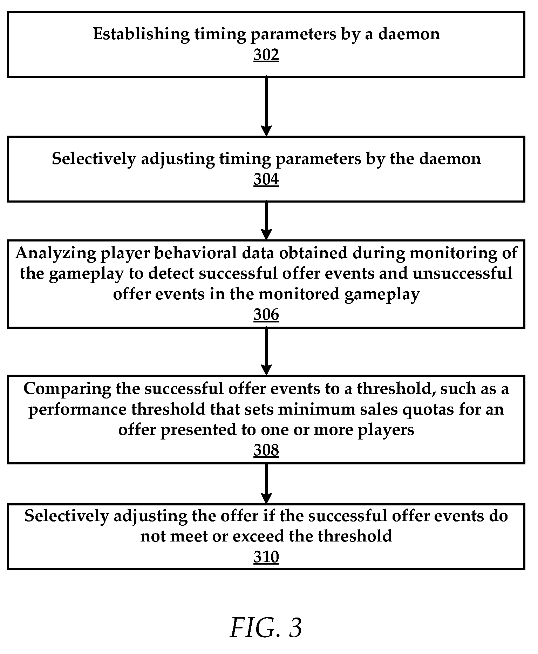

FIG. 3 is a flowchart of an example method for establishing and using timing parameters. The method includes a step 302 of establishing timing parameters by a daemon. Again, the timing parameters establish when and where offers are presented, as well as how long the offer persists.

In some embodiments, the method includes a step 304 of selectively adjusting timing parameters by the daemon. In one embodiment, the process includes a step 306 of analyzing player behavioral data obtained during monitoring of the gameplay to detect successful offer events and unsuccessful offer events in the monitored gameplay. The method also includes a step 308 of comparing the successful offer events to a threshold, such as a performance threshold that sets minimum sales quotas for an offer presented to one or more players.

In one or more embodiments, the method includes a step 310 of selectively adjusting the offer if the successful offer events do not meet or exceed the threshold.

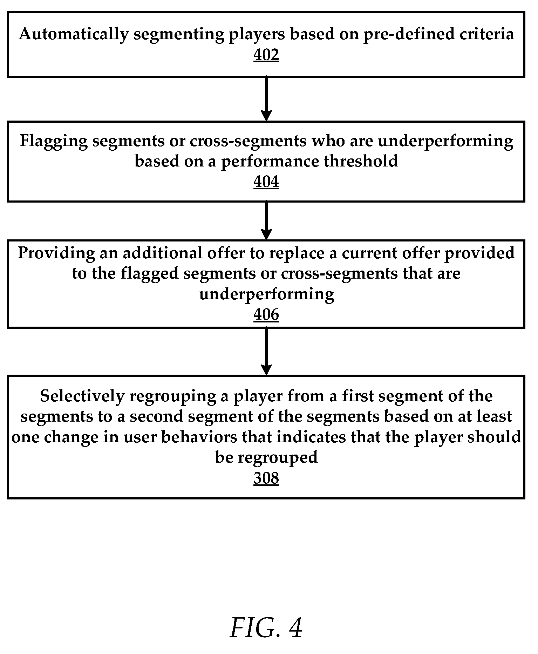

FIG. 4 is a flowchart of an example method for segmenting and targeting players alone or in groups (cohorts). The method comprises a step 402 of automatically segmenting players based on pre-defined criteria, such as current wealth, purchasing patterns, frequency of game play, need for assistance during gameplay, and so forth.

In one embodiment, the method includes a step 404 of flagging segments or cross-segments who are underperforming based on a performance threshold, as well as a step 406 of providing an additional offer to replace a current offer provided to the flagged segments or cross-segments that are underperforming. For example, it is determined that an offer has a lower than acceptable conversion rate compared to a threshold. The system can automatically adjust a price of the offer and reassess if the offer is performing at or above the threshold after a period of time.

In some embodiments, the systems disclosed herein can periodically re-evaluate the segmenting of players to ensure that offer targeting is likely to produce optimal returns. In on embodiment, the method includes a step 408 of selectively regrouping a player from a first segment of the segments to a second segment of the segments based on at least one change in user behaviors that indicates that the player should be regrouped.

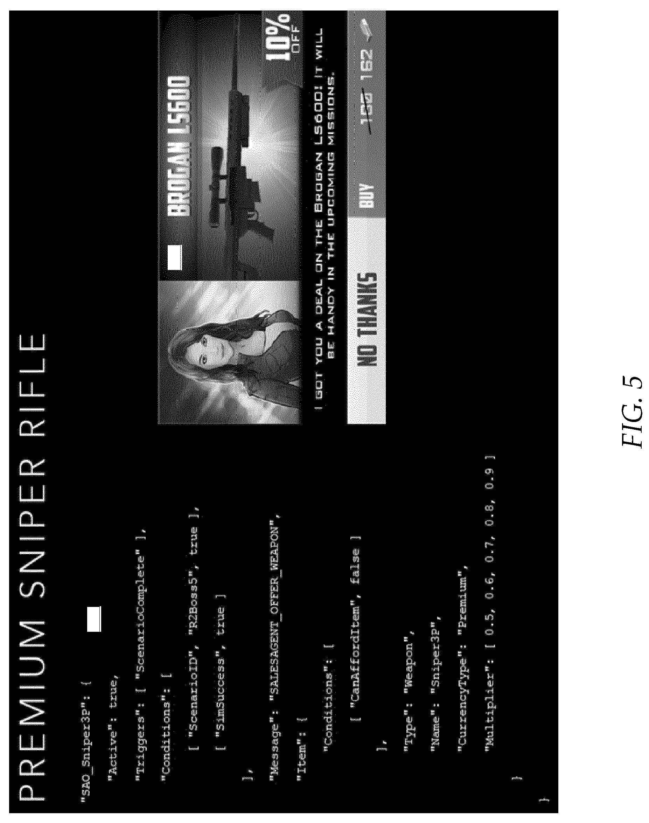

FIG. 5 illustrates an example GUI of an offer pop-up screen 500. The pop-up screen includes an offer for a player to purchase a weapon (item) for an upcoming mission that is based on a prior event being completed by the player (trigger). The offer includes a special price for the item that is based on conditions such as if the player can afford the item and the completion of the prior mission and impending mission. Example code 505 illustrates an example methodology/algorithm utilized to provide the offer in screen 500.

According to some embodiments, the systems and methods disclosed utilize artificial intelligence (AI) functionality to control and monitor gameplay and determine the presence of triggers during gameplay. Some embodiments utilize specific code scripts to determine when a trigger has occurred based on a particular action or activity occurring within gameplay for a user.

An example code representation of an AI algorithm that comprises the use of triggers, conditions, and other technical parameters to provide various aspects of the present disclosure are provided below:

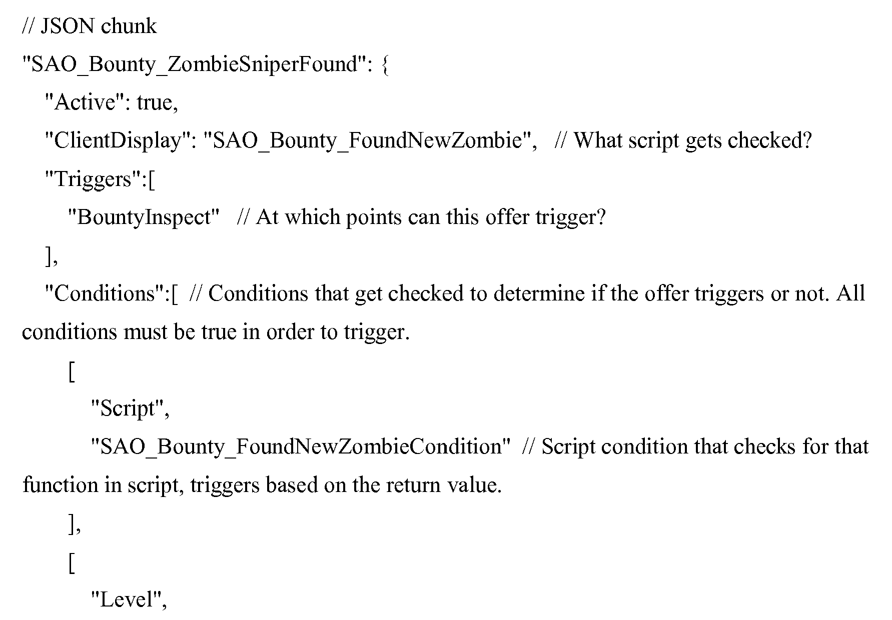

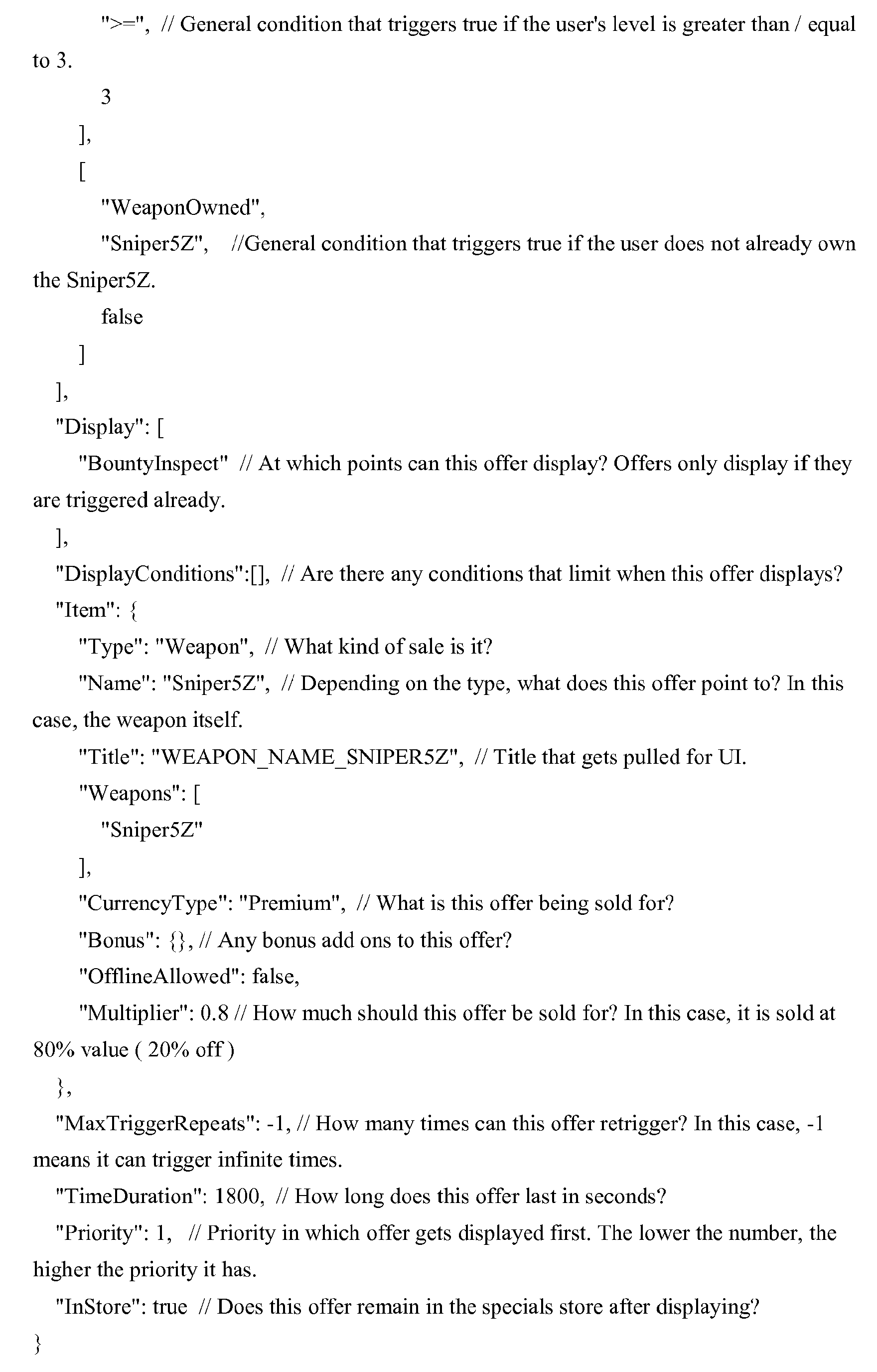

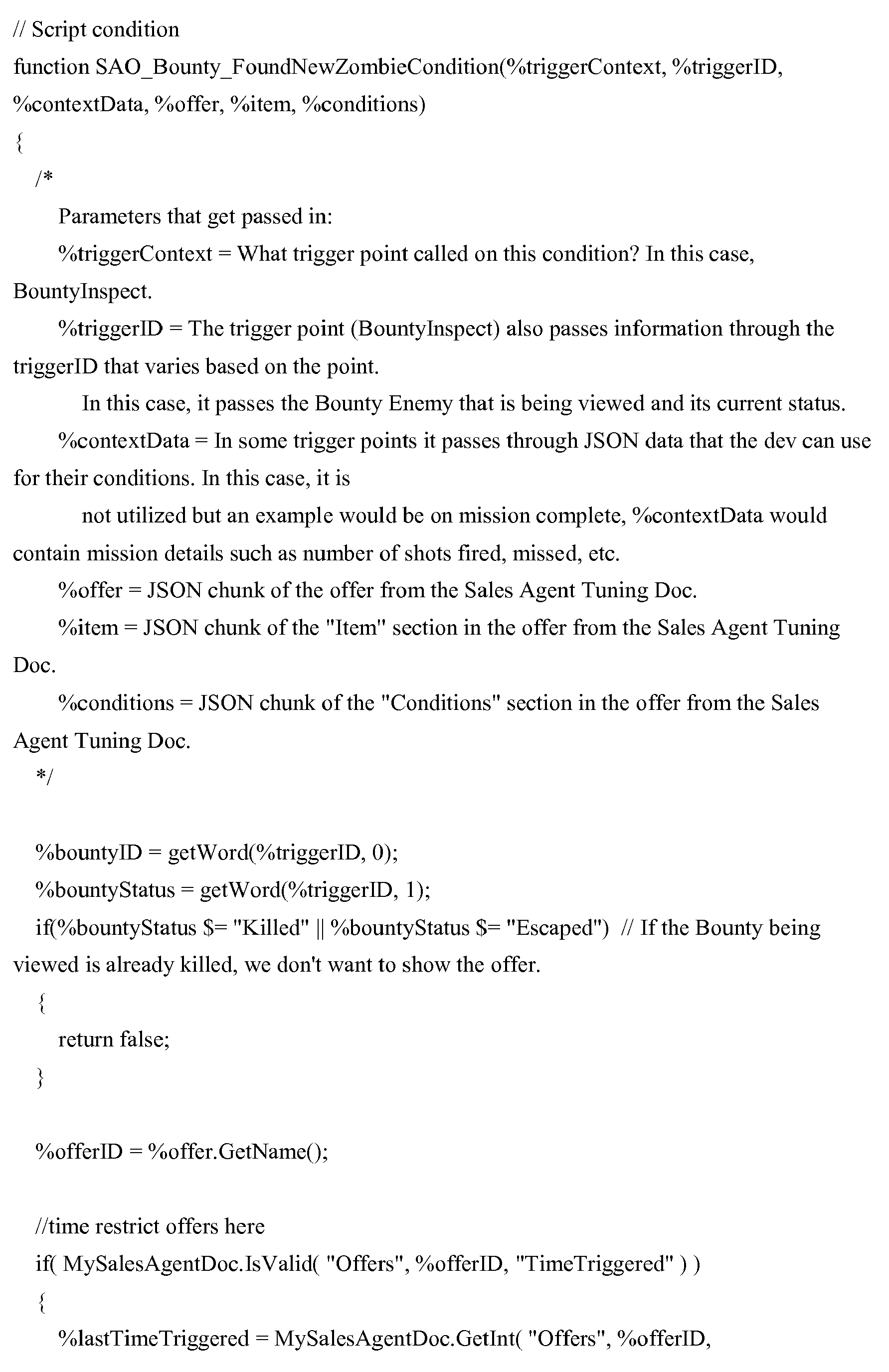

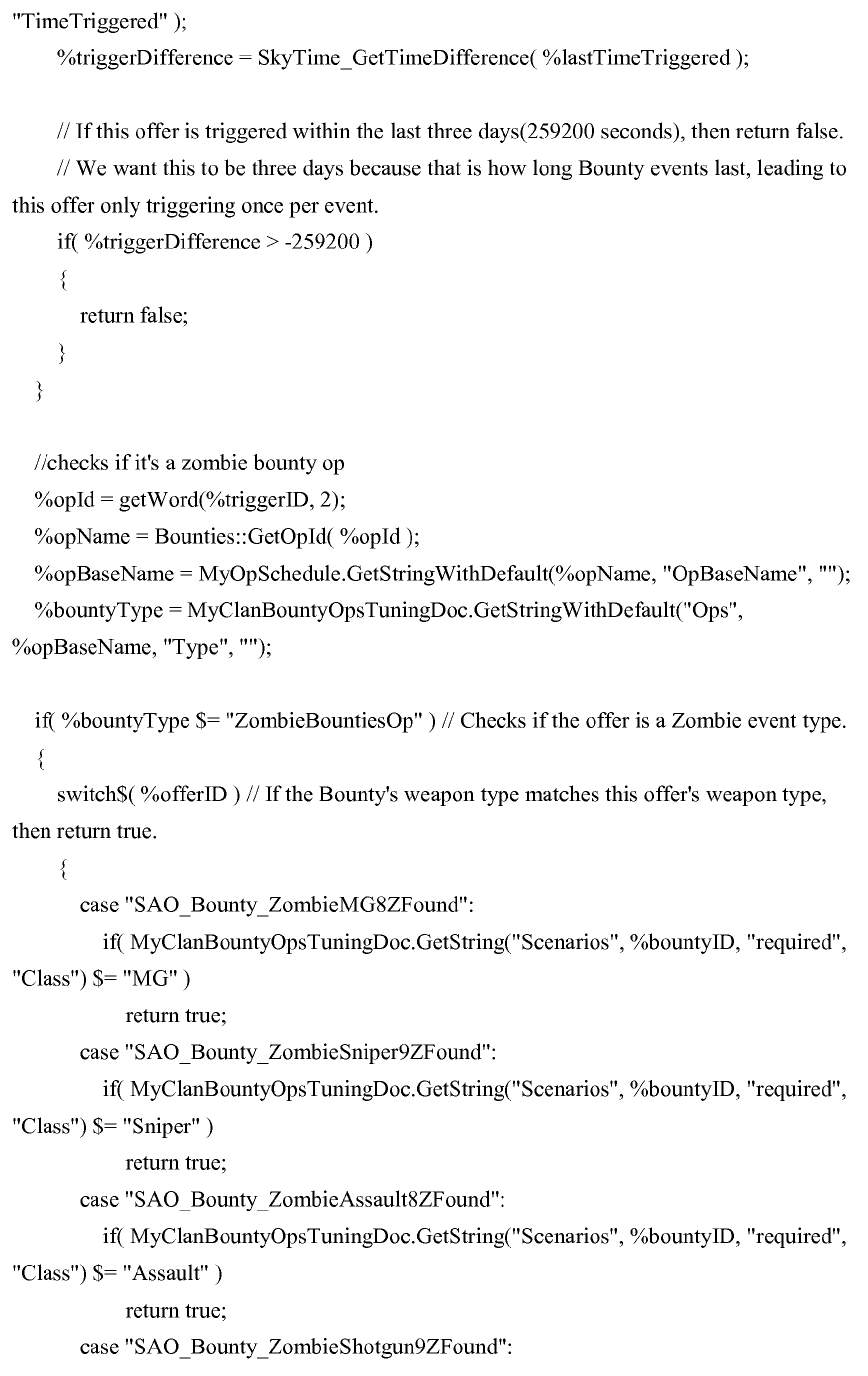

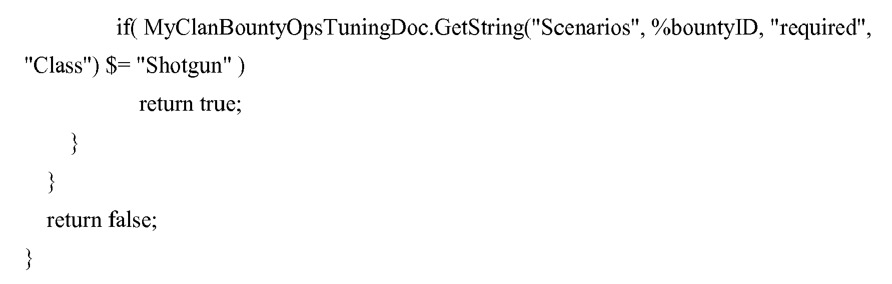

The game code that is executed during gameplay comprises a plurality of trigger points that are disposed at various stages, locations, events, or actions within the game. That is, the source code for the game comprises trigger points that when encountered by players will execute an offer display methodology.

Upon encountering a trigger point, the AI functionality determines a script that applies to the trigger point. The AI will receive various parameters such as a trigger context for the trigger point. In one embodiment, a trigger context allows the AI functionality to determine what trigger point is called using a trigger identifier. In the example above the trigger point involves BountyInspect. Each trigger point is associated with a trigger identifier, referred to as a triggerID that is based on various attributes of the trigger point encountered. That is, the trigger identifier allows the AI functionality to decipher what type of trigger point has been encountered and what the nature of the trigger point or event is. For example, a trigger point/trigger ID is indicative of a Bounty Enemy that is being viewed by a player in the game. The AI can utilize the triggerID to determine the specific attributes of the Bounty Enemy.

Additional information regarding Bounty Enemy or event that can be passed along to the AI as well such as any attributes associated with the Bounty Enemy or the environment being viewed by the player.

In some embodiments, context data can be passed to the AI, which can include JSON data that is representative of current or prior activity within the game. For example, if the player has just finished a mission (e.g., mission complete trigger point), the context data comprises relevant mission details such as number of shots fired, missed, and so forth.

The AI compiles and utilizes the aforementioned information to generate an appropriate offer for the player that is relevant to the current trigger point encountered by the player.

In some embodiments, each trigger event or trigger point is associated with a specific script that is executed when the trigger point is reached with the game. The specific script is determined using the triggerID. If a trigger point is reached, the AI can utilize the script and/or general conditions to check various conditions to determine if the trigger should be executed or not. The general conditions can relate to objective attributes regarding the player, whereas the script will relate to the trigger event and its parameters and attributes.

The AI can determine if an offer is appropriate to present or display based on a concurrent evaluation of both the script and the general conditions.

FIG. 6 is a diagrammatic representation of an example machine in the form of a computer system 1, within which a set of instructions for causing the machine to perform any one or more of the methodologies discussed herein may be executed. In various example embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a personal digital assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1 includes a processor or multiple processor(s) 5 (e.g., a central processing unit (CPU), a graphics processing unit (GPU), or both), and a main memory 10 and static memory 15, which communicate with each other via a bus 20. The computer system 1 may further include a video display 35 (e.g., a liquid crystal display (LCD)). The computer system 1 may also include an alpha-numeric input device(s) 30 (e.g., a keyboard), a cursor control device (e.g., a mouse), a voice recognition or biometric verification unit (not shown), a drive unit 37 (also referred to as disk drive unit), a signal generation device 40 (e.g., a speaker), and a network interface device 45. The computer system 1 may further include a data encryption module (not shown) to encrypt data.

The disk drive unit 37 includes a computer or machine-readable medium 50 on which is stored one or more sets of instructions and data structures (e.g., instructions 55) embodying or utilizing any one or more of the methodologies or functions described herein. The instructions 55 may also reside, completely or at least partially, within the main memory 10 and/or within the processor(s) 5 during execution thereof by the computer system 1. The main memory 10 and the processor(s) 5 may also constitute machine-readable media.

The instructions 55 may further be transmitted or received over a network (e.g., network 105B or network 520, see FIG. 1 and FIG. 5, respectively) via the network interface device 45 utilizing any one of a number of well-known transfer protocols (e.g., Hyper Text Transfer Protocol (HTTP)). While the machine-readable medium 50 is shown in an example embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the machine and that causes the machine to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like. The example embodiments described herein may be implemented in an operating environment comprising software installed on a computer, in hardware, or in a combination of software and hardware.

One skilled in the art will recognize that the Internet service may be configured to provide Internet access to one or more computing devices that are coupled to the Internet service, and that the computing devices may include one or more processors, buses, memory devices, display devices, input/output devices, and the like. Furthermore, those skilled in the art may appreciate that the Internet service may be coupled to one or more databases, repositories, servers, and the like, which may be utilized in order to implement any of the embodiments of the disclosure as described herein.

The corresponding structures, materials, acts, and equivalents of all means or step plus function elements in the claims below are intended to include any structure, material, or act for performing the function in combination with other claimed elements as specifically claimed. The description of the present technology has been presented for purposes of illustration and description, but is not intended to be exhaustive or limited to the present technology in the form disclosed. Many modifications and variations will be apparent to those of ordinary skill in the art without departing from the scope and spirit of the present technology. Exemplary embodiments were chosen and described in order to best explain the principles of the present technology and its practical application, and to enable others of ordinary skill in the art to understand the present technology for various embodiments with various modifications as are suited to the particular use contemplated.

Aspects of the present technology are described above with reference to flowchart illustrations and/or block diagrams of methods, apparatus (systems) and computer program products according to embodiments of the present technology. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present technology. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In the following description, for purposes of explanation and not limitation, specific details are set forth, such as particular embodiments, procedures, techniques, etc. in order to provide a thorough understanding of the present invention. However, it will be apparent to one skilled in the art that the present invention may be practiced in other embodiments that depart from these specific details.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" or "according to one embodiment" (or other phrases having similar import) at various places throughout this specification are not necessarily all referring to the same embodiment. Furthermore, the particular features, structures, or characteristics may be combined in any suitable manner in one or more embodiments. Furthermore, depending on the context of discussion herein, a singular term may include its plural forms and a plural term may include its singular form. Similarly, a hyphenated term (e.g., "on-demand") may be occasionally interchangeably used with its non-hyphenated version (e.g., "on demand"), a capitalized entry (e.g., "Software") may be interchangeably used with its non-capitalized version (e.g., "software"), a plural term may be indicated with or without an apostrophe (e.g., PE's or PEs), and an italicized term (e.g., "N+1") may be interchangeably used with its non-italicized version (e.g., "N+1"). Such occasional interchangeable uses shall not be considered inconsistent with each other.

Also, some embodiments may be described in terms of "means for" performing a task or set of tasks. It will be understood that a "means for" may be expressed herein in terms of a structure, such as a processor, a memory, an I/O device such as a camera, or combinations thereof. Alternatively, the "means for" may include an algorithm that is descriptive of a function or method step, while in yet other embodiments the "means for" is expressed in terms of a mathematical formula, prose, or as a flow chart or signal diagram.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/ or "comprising," when used in this specification, specify the presence of stated features, integers, steps, operations, elements, and/or components, but do not preclude the presence or addition of one or more other features, integers, steps, operations, elements, components, and/or groups thereof.

It is noted at the outset that the terms "coupled," "connected", "connecting," "electrically connected," etc., are used interchangeably herein to generally refer to the condition of being electrically/electronically connected. Similarly, a first entity is considered to be in "communication" with a second entity (or entities) when the first entity electrically sends and/or receives (whether through wireline or wireless means) information signals (whether containing data information or non-data/control information) to the second entity regardless of the type (analog or digital) of those signals. It is further noted that various figures (including component diagrams) shown and discussed herein are for illustrative purpose only, and are not drawn to scale.

While specific embodiments of, and examples for, the system are described above for illustrative purposes, various equivalent modifications are possible within the scope of the system, as those skilled in the relevant art will recognize. For example, while processes or steps are presented in a given order, alternative embodiments may perform routines having steps in a different order, and some processes or steps may be deleted, moved, added, subdivided, combined, and/or modified to provide alternative or sub-combinations. Each of these processes or steps may be implemented in a variety of different ways. Also, while processes or steps are at times shown as being performed in series, these processes or steps may instead be performed in parallel, or may be performed at different times.

While various embodiments have been described above, it should be understood that they have been presented by way of example only, and not limitation. The descriptions are not intended to limit the scope of the invention to the particular forms set forth herein. To the contrary, the present descriptions are intended to cover such alternatives, modifications, and equivalents as may be included within the scope of the invention as defined by the appended claims and otherwise appreciated by one of ordinary skill in the art. Thus, the breadth and scope of a preferred embodiment should not be limited by any of the above-described exemplary embodiments.

## Claims

1. A system, comprising:
a server (105) configured to provide (202) a virtual gaming environment; and
a daemon (160) configured to:
establish (204) one or more triggers that define when an offer is active within the virtual gaming environment, wherein the triggers are associated with game related events, one or more conditions under which the offer is triggered, and items that are provided in the offer;
monitor (206) gameplay within the gaming environment;
determine (208) at least one of the one or more triggers which are fulfilled during gameplay within the virtual gaming environment; and
provide (210) an item for use within the gameplay.

2. A system, comprising:
a server (105) configured to provide (202) a virtual gaming environment; and
a client (115) coupled with the server (105), wherein gameplay occurs on the client (115) and the client (115) comprises a daemon (160) configured to:
establish (204) one or more triggers that define when an offer is active within the virtual gaming environment, wherein the triggers are associated with game related events, one or more conditions under which the offer is triggered, and items that are provided in the offer;
monitor (206) gameplay within the gaming environment;
determine (208) at least one of the one or more triggers which are fulfilled during gameplay within the virtual gaming environment; and
provide (210) an item for use within the gameplay.

3. The system according to claim 1 or 2, wherein the virtual gaming environment comprises any of role playing games, first person shooter games, multiplayer games, sporting games, and any combinations thereof.

4. The system according to claim 1, 2 or 3, wherein the item has a use that is associated with any of the at least one trigger, the condition, and an aspect of the gameplay.

5. The system according to any of the preceding claims, wherein the daemon (160) is configured to maintain a configuration file that comprises a list of offers on a per player basis, the list of offers comprising the item.

6. The system according to any of the preceding claims, wherein the one or more conditions are configured to control whether the offer can be triggered by any of the one or more triggers.

7. The system according to any of the preceding claims, wherein each of the one or more triggers specifies a location, event, mission, or accomplishment within the gameplay that activates an offer for the item.

8. The system according to any of the preceding claims, wherein the daemon (160) is configured to monitor gameplay within the gaming environment to determine any of:
failure of a player to complete a mission or accomplishment; and
a player deficit that is indicative of an inability of the player to complete the mission or accomplishment;
wherein the item associated with the offer is preferably tailored to improving the player deficit.

9. The system according to claim 7 or 8, wherein the mission comprises a unit of activity performed or executed within the virtual gaming environment.

10. The system according to any of the preceding claims, wherein the item included in an offer is controlled through timing parameters established (302) by the daemon (160).

11. The system according to claim 10, wherein the timing parameters are selectively adjusted (304) by the daemon (160):
analyzing (306) player behavioral data obtained during monitoring of the gameplay to detect successful offer events and unsuccessful offer events in the monitored gameplay;
comparing (308) the successful offer events to a threshold; and
selectively adjusting (310) the offer if the successful offer events do not meet or exceed the threshold.

12. The system according to any of the preceding claims, wherein the item is provided in a pop-up graphical user interface during gameplay.

13. The system according to any of the preceding claims, wherein the daemon (160) is further configured to:
automatically segment (402) players based on pre-defined criteria;
flag (404) segments or cross-segments who are underperforming based on a performance threshold; and
provide (406) an additional offer to replace a current offer provided to the flagged segments or cross-segments that are underperforming.

14. The system according to claim 13, wherein the daemon is further configured to selectively regroup (308) a player from a first segment of the segments to a second segment of the segments based on at least one change in user behaviors that indicates that the player should be regrouped.

15. The system according to any of claims 1 or 3-14, wherein the daemon (160) resides on the server (105).
